# FASCICULE DE BREVET EUROPEEN

(11) **EP 2 958 766 B1**
(45) Date de publication et mention de la délivrance du brevet: **12.04.2017**
(21) Numéro de dépôt: 14713166.8
(22) Date de dépôt: 21.02.2014
(51) Int. Cl.: B60J 11/02

(54) **VÉHICULE AUTOMOBILE POURVU D'UN SYSTÈME DE BÂCHE DE PROTECTION**
KRAFTFAHRZEUG MIT EINEM SCHUTZPLANENSYSTEM
MOTOR VEHICLE PROVIDED WITH A PROTECTIVE TARPAULIN SYSTEM

(30) Priorité: 25.02.2013 FR 1351628
(43) Date de publication de la demande: 30.12.2015
(73) Titulaire: Sassi, André, 92500 Rueil Malmaison (FR); Sassi, Jocelyne, 92500 Rueil Malmaison (FR)
(72) Inventeur: Sassi, André, 92500 Rueil Malmaison (FR); Sassi, Jocelyne, 92500 Rueil Malmaison (FR)
(74) Mandataire: CAPRI
(86) Numéro de dépôt international: PCT/FR2014/050356
(87) Numéro de publication internationale: WO 2014/128413

(56) Documents cités:
- WO-A1-91/06443
- WO-A1-2011/004105
- CN-A- 101 870 254
- CN-C- 1 076 675
- CN-U- 201 922 907
- FR-A1- 2 947 489

## Description

La présente invention concerne un véhicule automobile, tel qu'une voiture, pourvu d'un système de bâche de protection. Le véhicule comprend une enveloppe externe, un pare-choc arrière et un pare-choc avant. Le système de protection comprend une bâche souple destinée à recouvrir au moins partiellement l'enveloppe du véhicule pour la protéger en s'étendant de son pare-choc arrière jusqu'à son pare-choc avant. La bâche définit une direction longitudinale qui s'étend dans la longueur du véhicule de l'arrière vers l'avant. En d'autres termes, la bâche est étendue ou tirée dans la direction longitudinale pour recouvrir le véhicule de l'arrière vers l'avant, ou inversement. Par conséquent, le domaine d'application privilégié de la présente invention est celui des voitures particulières, mais on peut également mettre en oeuvre la présente invention avec d'autres types de véhicules comme par exemple des véhicules utilitaires, des camions, des remorques, des bateaux, etc.

Il existe déjà depuis longtemps des bâches de protection pour véhicule automobile. Les modèles les plus simples prévoient uniquement une bâche souple que l'on déplie et tire sur le dessus du véhicule pour le recouvrir au moins partiellement. Une fois en place, la bâche peut être fixée au véhicule par diverses techniques, comme par exemple des élastiques, des crochets, etc. Ce type de bâche de protection rudimentaire présente deux inconvénients. Le premier réside dans l'opération de bâchage consistant à étendre la bâche sur le dessus du véhicule. Il faut tourner plusieurs fois autour du véhicule pour positionner correctement la bâche sur le véhicule. L'autre inconvénient réside dans le stockage de la bâche lorsqu'elle n'est pas en utilisation sur le véhicule. Il faut en effet replier la bâche correctement pour qu'elle présente un encombrement minimum. Ce dernier inconvénient est partiellement résolu par des systèmes de bâche de protection plus complexes utilisant un tambour d'enroulement sur lequel la bâche de protection est enroulée en position de stockage. Lorsque l'on veut utiliser la bâche, on la tire par une extrémité libre de manière à dérouler la bâche de son tambour d'enroulement. Ces tambours d'enroulement peuvent être installés à l'avant ou à l'arrière, ou encore sur le toit du véhicule. Il est également possible d'intégrer le tambour d'enroulement à l'intérieur de la malle arrière ou coffre du véhicule. Cependant, même avec un tambour d'enroulement, le système de bâche ne résout pas le problème lié à l'opération de bâchage du véhicule. En effet, il est toujours nécessaire de tirer sur l'extrémité libre de la bâche et de se déplacer pour étendre de manière appropriée la bâche souple sur le dessus du véhicule. En d'autres termes, le tambour d'enroulement est utile et efficace lors de l'opération d'enroulement ou de débâchage du véhicule, mais il n'est absolument d'aucune utilité pour l'opération de déroulement ou bâchage du véhicule.

Dans l'art antérieur, on connaît déjà le document WO2011/004105 qui décrit un système de protection comprenant une bâche pourvue d'éléments raidisseurs, sous la forme de lame métalliques ou de tuyaux gonflables, qui s'étendent sensiblement dans la direction longitudinale pour conférer une certaine raideur à la bâche souple afin de faciliter l'opération de bâchage du véhicule. Un câble de traction monté sur un enrouleur permet de tirer la bâche lors de l'opération de bâchage. Ces éléments raidisseurs augmentent l'épaisseur de la bâche et se révèlent inefficaces, notamment lorsqu'il y a du vent.

La présente invention a pour but de faciliter l'opération de bâchage du véhicule de telle sorte que sa mise en place ne nécessite pas, ou que très peu, l'intervention de l'utilisateur. Un autre but de la présente invention est de faciliter ou d'automatiser l'opération de bâchage du véhicule, sans pour autant gêner ou compliquer l'opération de débâchage. Encore un autre but de l'invention est de faciliter l'opération de bâchage sans pourvoir la bâche de structure rigide qu'il est nécessaire de rétracter, replier, escamoter à l'aide de mécanismes compliqués. Un autre but est de masquer au maximum le système de bâchage dans le véhicule.

Pour atteindre ces différents buts, la présente invention propose un véhicule automobile, tel qu'une voiture, définissant une direction longitudinale qui s'étend dans la longueur du véhicule entre un pare-choc arrière et un pare-choc avant, le véhicule comprenant une enveloppe externe s'étendant sensiblement d'un pare-choc à l'autre à partir d'un bas de caisse, le véhicule étant en outre pourvu d'un système de bâche de protection comprenant une bâche souple destinée à recouvrir au moins partiellement l'enveloppe externe du véhicule pour la protéger, le système comprenant en outre un tambour d'enroulement, avantageusement installé au niveau du pare-choc arrière du véhicule, la bâche étant enroulable autour du tambour entre une position enroulée de stockage et une position déroulée de bâchage, la bâche comprenant un bord de liaison solidaire du tambour et une bord libre opposé, caractérisé en ce que le bord libre de la bâche souple comprend au moins un élément de traction en matériau ferromagnétique, et le véhicule comprend au moins un aimant mobile déplaçable sous l'enveloppe externe le long d'un chemin de traction qui s'étend dans la direction longitudinale, l'aimant mobile attirant l'élément de traction de la bâche à travers l'enveloppe externe et entraînant avec lui l'élément de traction de la bâche le long du chemin de traction pour amener la bâche en position déroulée de bâchage en glissant sur l'enveloppe externe.

Ainsi, la bâche est maintenue et guidée longitudinalement au niveau de son bord libre équipé de l'élément de traction qui suit le déplacement de l'aimant mobile en glissant sur l'enveloppe externe sous laquelle se déplace l'aimant mobile. Par « enveloppe externe », on entend toute surface externe du véhicule, notamment au niveau de son capot, de ses ailes, de son toit, et/ou de son coffre ou haillon arrière. Le matériau ferromagnétique de l'élément de traction peut être du fer, du cobalt ou du nickel, ou même un aimant, de préférence permanent. Quant à l'aimant mobile, il s'agit de préférence d'un aimant permanent, mais il peut également s'agir d'un électroaimant.

Avantageusement, l'élément de traction est souple. L'élément de traction peut comprendre plusieurs pièces ferromagnétiques distinctes reliées de manière articulée entre elles. En variante, l'élément de traction peut comprendre un tissu souple formé de fils en matériau ferromagnétique. Ainsi, l'élément de traction peut non seulement être enroulé, mais également suivre le contour de l'enveloppe externe.

Selon un mode de réalisation pratique, l'aimant mobile peut être relié par un câble de traction à un enrouleur, qui est avantageusement disposé au niveau du pare-choc avant. Avantageusement, l'aimant mobile reste solidaire de l'élément de traction lors de son enroulement sur le tambour avec le câble de traction détendu ou avec une légère tension. Ainsi, l'élément de traction est toujours solidaire de son aimant mobile lors de son déplacement sur l'enveloppe externe le long du chemin de traction. En d'autres termes, l'élément de traction, et de ce fait la bâche, est guidée longitudinalement d'un pare-choc à l'autre par l'aimant mobile, que ce soit lors de l'opération de bâchage ou de débâchage. De préférence, il est prévu deux éléments de traction qui sont chacun en prise aimantée avec un aimant mobile respectif.

Selon un autre aspect intéressant de l'invention, le véhicule peut comprendre une goulotte de guidage dans laquelle l'aimant mobile est déplacé, la goulotte de guidage s'étend à proximité directe sous l'enveloppe externe du véhicule. L'aimant mobile peut être déplacé à l'aide d'un câble de traction comme évoqué précédemment, ou par n'importe quel autre moyen.

Afin de permettre une bonne propagation du champ magnétique, il est préférable que l'enveloppe externe soit non ferromagnétique, avantageusement en aluminium ou en matière plastique ou composite.

Selon une autre caractéristique avantageuse de l'invention, la bâche comprend une zone recouverte de cellules photovoltaïques. Cette zone peut par exemple s'étendre sur le capot, le pare-brise, le toit et le coffre ou haillon arrière.

Selon un autre aspect intéressant de l'invention, la bâche peut former de part et d'autre de la zone des rabats latéraux souples destinés à recouvrir les flancs latéraux du véhicule. De préférence, les rabats latéraux souples comprennent au moins un insert ferromagnétique et le véhicule comprend des aimants fixes à proximité du bas de caisse pour maintenir les rabats latéraux plaqués sur l'enveloppe externe. L'insert ferromagnétique peut par exemple se présenter sous la forme d'un liseré qui s'étend le long du bord de la bâche. Quant aux aimants fixes, il peut s'agit d'aimants permanents ou d'électroaimants. Ainsi, la bâche est maintenue contre l'enveloppe externe du véhicule et n'est plus soumise au vent.

Selon un autre aspect de l'invention, l'enveloppe externe comprend des moyens de chauffage pour chauffer la bâche. Ces moyens de chauffage permettent de maintenir l'enveloppe externe à une température positive, ce qui permet son enroulement. D'autre part, le véhicule est maintenu à une température agréable et n'est plus nécessaire de le dégivrer. L'alimentation des moyens de chauffage peut bien entendu être fournie par les cellules photovoltaïques présentes sur la bâche.

L'esprit de l'invention réside dans le fait de maintenir la bâche plaquée sur l'enveloppe externe du véhicule lors des opérations de bâchage et de débâchage. L'utilisation d'un ou de plusieurs aimant(s) mobile(s) qui se déplace(nt) sous l'enveloppe externe le long d'un chemin de traction longitudinale permet d'atteindre ce but.

L'invention sera maintenant plus amplement décrite en référence aux dessins joints donnant à titre d'exemple non limitatif deux modes de réalisation de l'invention.

Sur les figures :
Les figures 1 et 2 est une vue de côté d'un véhicule équipé qu'un système de bâche de protection selon l'invention, respectivement en condition débâchée et en cours de bâchage,
La figure 3 est une vue de dessus du véhicule de la figure 1,
La figure 4 est une vue très schématique du système de bâchage de l'invention,
La figure 5 est une vue en coupe verticale à travers la partie arrière du véhicule montrant le système de l'invention, et
La figure 6 est une vue schématique de la bâche de l'invention.

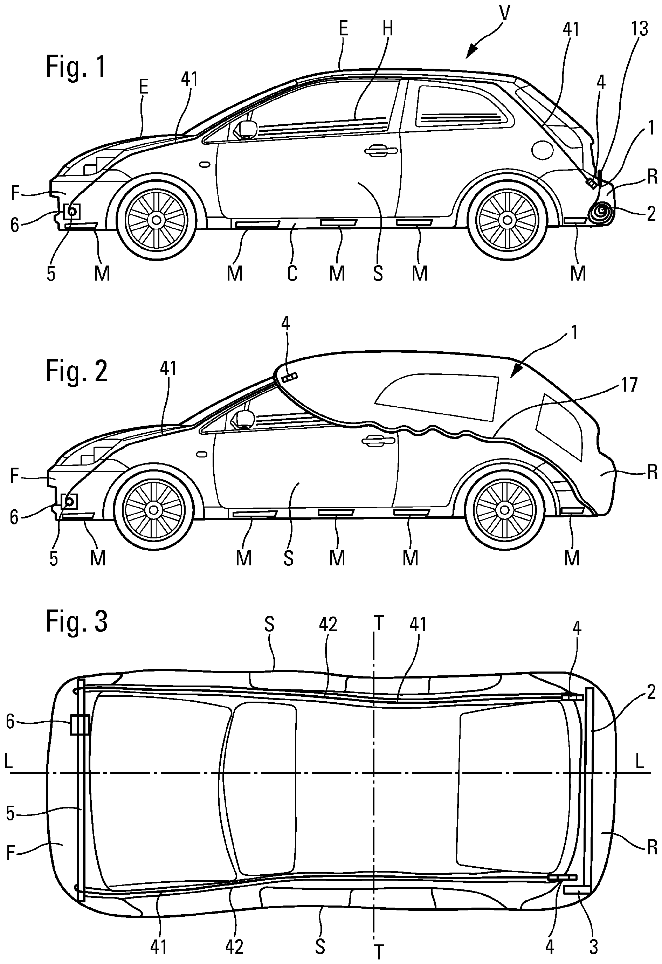

Le système de bâche de protection de la présente invention est destiné à être associé ou intégré à un véhicule automobile, tel qu'une voiture particulière ou encore un véhicule utilitaire, un camion, une remorque, voire un bateau. On peut même envisager d'utiliser le système de bâche de l'invention pour recouvrir d'autres objets, mobiles ou non, et même des constructions, comme par exemple un bassin, une piscine, etc. Sur les figures 1 à 6 qui sont utilisées pour illustrer la présente invention, le système de bâche a été intégré dans un véhicule automobile de type particulier. Ce véhicule V comprend de manière classique un bas de caisse C, plusieurs roues, un moteur, et un habitacle. Le véhicule V comprend également un pare-choc arrière R, une enveloppe externe E et un pare-choc avant F, comme visible sur la figure 1. L'enveloppe externe E du véhicule, destinée à être au moins partiellement bâchée par le système de bâche de l'invention, est constituée par la malle ou hayon arrière, le toit, le capot, les portes et les ailes, ainsi qu'une partie des pare-chocs arrière et avant. Le système de bâche de l'invention peut recouvrir la totalité de l'enveloppe externe E, à l'exclusion des roues et d'une partie du pare-choc arrière. Ceci n'est qu'un exemple de réalisation non limitatif.

Le système de bâchage de la présente invention comprend des moyens d'enroulement/déroulement de bâche disposés dans le pare-choc arrière R, une bâche 1 en prise avec les moyens d'enroulement/déroulement, un enrouleur disposé dans le pare-choc avant F, et au moins un aimant mobile 4 qui est relié par un câble de traction 41 à l'enrouleur du pare-choc avant F.

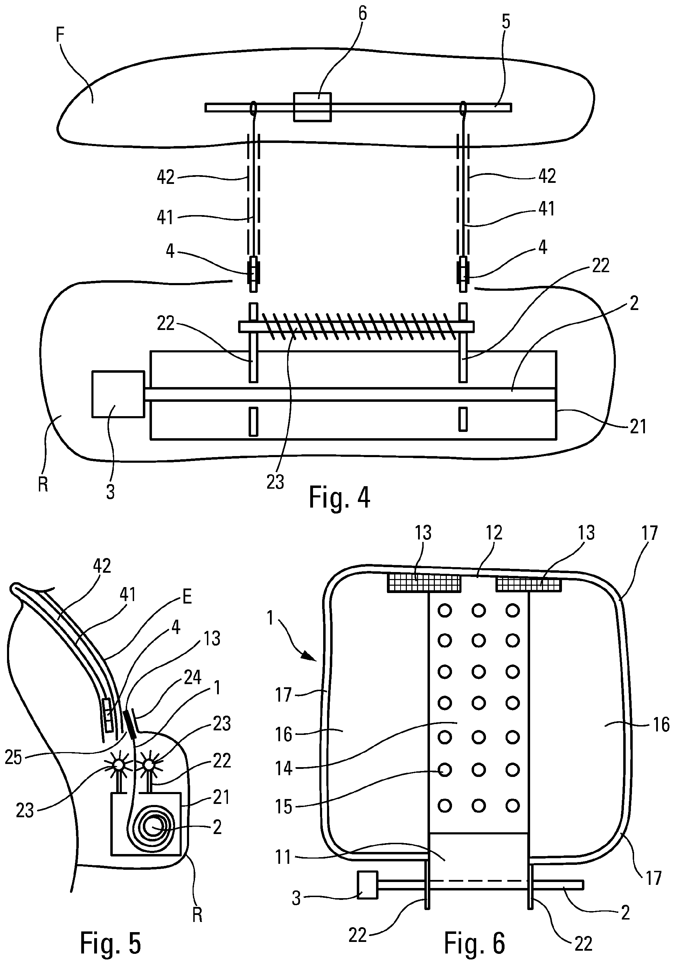

Les moyens d'enroulement/déroulement de bâche comprennent, comme visible plus en détail sur les figures 4 et 5, un tambour d'enroulement/déroulement rotatif 2 qui est disposé parallèlement à la direction transversale T qui s'étend sur la largeur du véhicule, comme visible sur la figure 3. Ce tambour rotatif 2 est entraîné en rotation par un moteur 3, qui est de préférence électrique. Le tambour rotatif 2 est logé dans un carter 21 qui définit un espace intérieur suffisant pour accueillir la bâche 1 en condition enroulée. Le tambour rotatif 2, son moteur 3 et son carter 21 sont entièrement logés à l'intérieur du pare-choc arrière R, comme visible sur les figures. Le tambour rotatif 2 est avantageusement pourvu de deux flasques 22 qui supportent deux rouleaux de brosse 23 de manière parallèle avec un espace réduit entre eux, comme visible sur la figure 5. A la sortie du carter 21, la bâche 1 passe entre les deux rouleurs de brosse 23 afin d'être nettoyée notamment lors de l'enroulement de la bâche. La bâche 1 sort du pare-choc arrière R à travers une fenêtre allongée 25 qui est avantageusement pourvue d'un couvercle pivotant 24. On peut noter que la fenêtre allongée 25 est disposée à proximité directe de l'enveloppe externe E du véhicule. Ainsi, dès que la bâche 1 sort du pare-choc arrière R, elle est disposée à proximité de l'enveloppe externe E. L'orientation de la bâche vers l'enveloppe externe E peut en outre être facilitée par le couvercle 24 qui peut servir de déflecteur.

La bâche 1 de l'invention est visible sur la figure 6. Elle peut être réalisée à partir de n'importe quel feuille ou film souple présentant une épaisseur réduite. De nombreux matériaux, notamment plastique, sont appropriés pour la réalisation d'une bâche 1 selon l'invention. Les dimensions (largeur, longueur) de la bâche sont adaptées en fonction de la taille du véhicule qu'elle doit recouvrir. On peut par exemple prévoir une bâche ayant 5,60 m de longueur sur 3,80 m de largeur. La bâche comprend de préférence une zone centrale longitudinale 14 qui est avantageusement pourvue de cellules photovoltaïques 15. Ces cellules 15 sont pleinement efficaces au soleil, mais également à l'ombre avec une luminosité minimum. Cette zone 14 peut s'étendre sur le capot, le pare-brise, le toit et le coffre ou haillon arrière du véhicule. De part et d'autre de cette zone 14, la bâche forme des rabats 16 qui peuvent être plus souples que la zone 14 pourvue des cellules photovoltaïques 15. Ces rabats souples 16 sont destinés à recouvrir les flans ou côtés latéraux du véhicule, et notamment les ailes et les portes. Ces rabats 16 peuvent également être pourvus de moyens de captage de l'énergie solaire, comme par exemple des fibres photovoltaïques. La bâche 1 comprend un bord de liaison 11 qui est raccordé au tambour rotatif 2 entre les deux flasques 22. On peut remarquer que la largeur de la zone 14 correspond sensiblement à l'écartement des deux flasques 22. Ainsi, la zone 14 s'enroule sur le tambour rotatif 2 entre les flasques 22, alors que les rabats latéraux souples 16 sont enroulés sur l'arbre rotatif 2 de part et d'autre des flasques 22. Etant donné que la zone 14 est au moins partiellement couverte de cellules photovoltaïques 15, elle présente une rigidité relative plus importante que celle des rabats souples 16. Il est donc avantageux d'enrouler la zone 14 autour du tambour 2 sans la froisser à la manière d'un rouleau. Il importe peu que les rabats 16 soient plus ou moins froncés, car ils présentent une grande souplesse. La bâche 1 définit également un bord libre qui est opposé au bord de liaison 11. Selon l'invention, ce bord libre 12 est pourvu d'au moins un élément de traction 13, et de préférence deux, comme visible sur la figure 6. Ces deux éléments de traction 13 comprennent un matériau ferromagnétique, tel que du fer, du nickel ou du cobalt. Ces éléments de traction 13 peuvent être formés à partir de plusieurs pièces rigides séparées reliées entre elles de manière articulée. En variante, les éléments de traction 13 peuvent être réalisés à partir d'une toile souple réalisée par tissage de fils en matériau ferromagnétique. Chaque élément de traction 13 peut s'étendre sur une certaine largeur de la bâche. En position complètement enroulée de stockage, les éléments de traction 13 peuvent être disposés et maintenus entre les deux rouleaux de brosse 23, juste en dessous de la fenêtre allongée 25 du pare-choc arrière R. Selon une autre caractéristique intéressante, le pourtour de la bâche 1 est pourvu d'au moins un insert ferromagnétique 17 qui s'étend au moins au niveau des rabats latéraux 16. Cet insert ferromagnétique peut par exemple se présenter sous la forme d'un liseré ferromagnétique continu qui est cousu dans un ourlet périphérique de la bâche. Ce liseré va être maintenu plaqué contre l'enveloppe externe E au niveau du bas de caisse C du véhicule qui est avantageusement pourvu d'aimants fixes M, qui peuvent être des aimants permanents ou encore des électroaimants. Ainsi, les rabats latéraux 16 de la bâche sont maintenus plaqués contre l'enveloppe externe E, même en cas de vent.

Au niveau du pare-choc avant F, l'enrouleur comprennent un arbre rotatif 5 qui est disposé parallèlement au tambour rotatif 2. Cet arbre 5 est entraîné en rotation sur lui-même par un moteur 6. Deux câbles de traction 41 sont fixés par une de leurs extrémités à l'arbre rotatif 5 et comprennent à leurs extrémités opposées deux aimants mobiles 4, qui peuvent être constituées par un chapelet de plusieurs segments d'aimants. Les câbles 41 et les aimants mobiles 4 sont disposés à l'intérieur de goulottes de guidage 42 qui s'étendent sous l'enveloppe externe E le long d'un chemin de traction qui s'étend du pare-choc avant au pare-choc arrière, au niveau de la fenêtre allongée 25. Les goulottes de guidage 42 sont de préférence plaquées sous l'enveloppe externe E afin de réduire la distance qui les sépare de la surface externe de l'enveloppe E. Chaque goulotte de guidage 42 peut par exemple s'étendre à partir du pare-choc avant F le long des ailes avant, à côté du pare-brise, le long du toit, et le long des ailes arrières jusqu'au pare-choc arrière R. La direction globale des goulottes de guidage 42 est longitudinale, comme on peut le voir sur la figure 3. Les aimants mobiles 4 sont déplaçables à l'intérieur de ces goulottes de guidage 42 en enroulant les câbles de traction 41 sur l'arbre rotatif 5 entraîné par le moteur 6. Dans la position complètement déroulée visible sur la figure 5, les aimants mobiles 4 sont disposés sous l'enveloppe externe E à proximité directe de la fenêtre longitudinale 25 du pare-choc arrière R. Ainsi, dès que les éléments de traction 13 sortent du pare-choc arrière R à travers la fenêtre allongée 25, ils sont attirés par les aimants mobiles 4 et de ce fait plaqués contre l'enveloppe externe E. L'arrimage de la bâche 1 sur les aimants mobiles 4 est alors réalisé. Il suffit ensuite d'actionner les deux moteurs 3 et 6 de manière coordonnée, par exemple à l'aide d'un automate (non représenté), pour tirer les aimants 4 à travers les goulottes de guidage 42 au moyen des câbles de traction 41 pour dérouler la bâche 1 qui est maintenue plaquée sur l'enveloppe externe 2 et guidée longitudinalement par les aimants 4. La coordination des deux moteurs 3 et 6 est nécessaire afin de ne pas décrocher les éléments de traction 13 des aimants mobiles 4. L'opération de bâchage se poursuit ainsi jusqu'à ce que les éléments de traction 13 parviennent au niveau du pare-choc avant F. Le véhicule est alors complètement bâché avec les cellules photovoltaïques déployées sur le dessus du véhicule et les rabats latéraux 16 qui enveloppent les flancs du véhicule. La bâche 1 est ainsi maintenue en place sur le véhicule d'une part par les aimants mobiles 4 et d'autre part par les aimants fixes M prévus au niveau du bas de caisse, qui coopèrent avec le liseré ferromagnétique 17.

Lors de l'opération de débâchage, les moteurs 3 et 6 sont à nouveau mis en marche de manière coordonnée de manière à ce que les éléments de traction 13 restent en prise magnétique avec les aimants mobiles 4. Pour ce faire, l'arbre rotatif 5 doit être entraîné de telle manière à maintenir les câbles de traction 41 avec une tension nulle ou très légère. Les aimants mobiles 4 ne remplissent plus une fonction de traction, comme lors de l'opération de bâchage, mais uniquement une fonction de guidage longitudinale, afin que la bâche s'enroule parfaitement sur le tambour rotatif 2 sans être désaxée latéralement. Une fois l'opération de débâchage réalisé, on revient dans la configuration représentée sur la figure 5.

Une autre caractéristique optionnelle de la présente invention prévoit des moyens de chauffage H, par exemple au niveau des vitres latérales et/ou arrière pour chauffer la bâche 1 à une température positive. Ainsi, la bâche 1 peut être enroulée sur le tambour rotatif 2 sans être recouverte de givre ou de neige. Le passage de la bâche entre les deux rouleaux de brosse 23 permet de garantir un nettoyage parfait de la bâche à l'état enroulé de stockage. Les moyens de chauffage H permettent également de maintenir l'habitacle du véhciule à une température agréable. Les cellules photovoltaïques 15 de la zone 14 peuvent fournir au moins une partie de l'énergie nécessaire aux moyens de chauffage H. L'énergie solaire captée par les cellules photovoltaïques 15 de la zone 14 permet par exemple de charger la batterie d'un moteur thermique, électrique ou hybride.

La présente invention a été illustrée avec un mode de réalisation mettant en oeuvre deux aimants mobiles 4, deux éléments de traction 13 et deux câbles de traction 42. Toutefois, on peut envisager d'autres modes de réalisation avec un seul aimant 4, ou au contraire plus de deux aimants.

Grâce à l'invention, la bâche souple est guidée longitudinalement, lors de l'opération de bâchage et/ou de débâchage, par des moyens magnétiques qui sont invisibles, puisque disposés sous l'enveloppe externe du véhicule.

## Revendications

1. Véhicule automobile (V), tel qu'une voiture, définissant une direction longitudinale (L) qui s'étend dans la longueur du véhicule entre un pare-choc arrière (R) et un pare-choc avant (F), le véhicule comprenant une enveloppe externe (E) s'étendant sensiblement d'un pare-choc à l'autre à partir d'un bas de caisse (C), le véhicule étant en outre pourvu d'un système de bâche de protection comprenant une bâche souple (1) destinée à recouvrir au moins partiellement l'enveloppe externe (E) du véhicule (V) pour la protéger, le système comprenant en outre un tambour d'enroulement (2), avantageusement installé au niveau du pare-choc arrière (R) du véhicule, la bâche (1) étant enroulable autour du tambour (2) entre une position enroulée de stockage et une position déroulée de bâchage, la bâche (1) comprenant un bord de liaison (11) solidaire du tambour (3) et une bord libre (12) opposé,
**caractérisé en ce que** :
- le bord libre (11) de la bâche souple (1) comprend au moins un élément de traction (13) en matériau ferromagnétique, et
- le véhicule (V) comprend au moins un aimant mobile (4) déplaçable sous l'enveloppe externe (E) le long d'un chemin de traction qui s'étend dans la direction longitudinale (L), l'aimant mobile (4) attirant l'élément de traction (13) de la bâche (1) à travers l'enveloppe externe (E) et entraînant avec lui l'élément de traction (13) de la bâche (1) le long du chemin de traction pour amener la bâche (1) en position déroulée de bâchage en glissant sur l'enveloppe externe (E).

2. Véhicule selon la revendication 1, dans lequel l'élément de traction (13) est souple.

3. Véhicule selon la revendication 1 ou 2, dans lequel l'aimant mobile (4) est relié par un câble de traction (41) à un enrouleur (5, 6), qui est avantageusement disposé au niveau du pare-choc avant (F).

4. Véhicule selon la revendication 3, dans lequel l'aimant mobile (4) reste solidaire de l'élément de traction (13) lors de son enroulement sur le tambour (2) avec le câble de traction (41) détendu ou avec une légère tension.

5. Véhicule l'une quelconque des revendications précédentes, comprenant une goulotte de guidage (42) dans laquelle l'aimant mobile (4) est déplacé, la goulotte de guidage (42) s'étend à proximité directe sous l'enveloppe externe (E) du véhicule.

6. Véhicule selon l'une quelconque des revendications précédentes, dans lequel l'enveloppe externe (E) est non ferromagnétique, avantageusement en aluminium ou en matière plastique ou composite.

7. Véhicule selon l'une quelconque des revendications précédentes, dans lequel la bâche (1) comprend une zone (14) recouverte de cellules photovoltaïques (15).

8. Véhicule selon la revendication 7, dans lequel la bâche (1) forme de part et d'autre de la zone (14) des rabats latéraux souples (16) destinés à recouvrir les flancs latéraux du véhicule (V).

9. Véhicule selon la revendication 8, dans lequel les rabats latéraux souples (16) comprennent au moins un insert ferromagnétique (17) et le véhicule (V) comprend des aimants fixes (M) à proximité du bas de caisse (C) pour maintenir les rabats latéraux (16) plaqués sur l'enveloppe externe (E).

10. Véhicule selon l'une quelconque des revendications précédentes, dans lequel l'enveloppe externe (E) comprend des moyens de chauffage (H) pour chauffer la bâche (1).

## Patentansprüche

1. Kraftfahrzeug (V) wie zum Beispiel ein Personenwagen, das eine Längsrichtung (L) besitzt, die sich über die Länge des Kraftfahrzeuges zwischen einem hinteren Stoßfänger (R) und einem vorderen Stoßfänger (F) erstreckt, wobei das Fahrzeug eine Außenhülle (E) aufweist, die sich im Wesentlichen ausgehend von einem Unterboden (C) von einem Stoßfänger zum anderen erstreckt, wobei das Fahrzeug weiterhin mit einem Abdeckplanen-Schutzsystem versehen ist, das eine flexible Plane (1) umfasst, die dazu dient, die Außenhülle (E) des Fahrzeugs (V) zumindest teilweise abzudecken, um sie zu schützen, wobei das System weiterhin eine Aufwickeltrommel (2) umfasst, die vorteilhafter Weise im Bereich des hinteren Stoßfängers (R) des Fahrzeugs montiert ist, wobei die Plane (1) um die Trommel (2) herum zwischen einer aufgewickelten Lagerungsposition und einer abgewickelten Abdeckposition auf- bzw. abwickelbar ist und wobei die Plane (1) einen Verbindungsrand (11), der mit der Trommel (3) fest verbunden ist, und einen gegenüberliegenden freien Rand (12) aufweist,
**dadurch gekennzeichnet,**
- **dass** der freie Rand (12) der flexiblen Plane (1) wenigstens ein Zugelement (13) aus ferromagnetischem Material umfasst und
- **dass** das Fahrzeug (V) wenigstens einen beweglichen Magneten (4) umfasst, der unter der Außenhülle (E) längs eines Zugweges verschiebbar ist, der sich in Längsrichtung (L) erstreckt, wobei der bewegliche Magnet (4) das Zugelement (13) der Plane (1) durch die Außenhülle (E) hindurch anzieht und das Zugelement (13) der Plane (1) längs des Zugweges antreibt, um die Plane (1) in die abgewickelte Abdeckposition mitzunehmen, wobei die Plane auf der Außenhülle (E) gleitet.

2. Fahrzeug nach Anspruch 1, bei dem das Zugelement (13) flexibel ist.

3. Fahrzeug nach Anspruch 1 oder 2, bei dem der bewegliche Magnet (4) über ein Zugkabel (41) mit einem Aufwickler (5, 6) verbunden ist, der vorteilhafter Weise im Bereich des vorderen Stoßfängers (F) angeordnet ist.

4. Fahrzeug nach Anspruch 3, bei dem der bewegliche Magnet (4) mit dem Zugelement (13) fest verbunden bleibt, wenn dieses auf die Trommel (2) aufgewickelt ist, wobei das Zugkabel (41) entspannt ist oder unter einer geringen Spannung steht.

5. Fahrzeug nach einem der vorhergehenden Ansprüche, das einen Führungskanal (42) umfasst, in welchem der bewegliche Magnet (4) verschiebbar ist, wobei der Führungskanal (42) sich in unmittelbarer Nähe der Außenhülle (E) des Fahrzeugs erstreckt.

6. Fahrzeug nach einem der vorhergehenden Ansprüche, bei dem die Außenhülle (E) nicht ferromagnetisch ist und vorzugsweise aus Aluminium oder einem Kunststoffmaterial oder einem Kompositmaterial besteht.

7. Fahrzeug nach einem der vorhergehenden Ansprüche, bei dem die Plane (1) eine mit fotovoltaischen Zellen (15) bedeckte Zone (14) umfasst.

8. Fahrzeug nach Anspruch 7, bei dem die Plane (1) beiderseits der Zone (14) seitliche flexible Laschen (16) umfasst, die dazu bestimmt sind, die Seitenbereiche des Fahrzeuges (V) abzudecken.

9. Fahrzeug nach Anspruch 8, bei dem die seitlichen flexiblen Laschen (16) wenigstens eine ferromagnetische Einlage (17) aufweisen und das Fahrzeug (V) feste Magnete (M) in der Nähe des Unterbodens (C) besitzt, um die seitlichen Laschen (16) an der Außenhülle (E) in Anlage zu halten.

10. Fahrzeug nach einem der vorhergehenden Ansprüche, bei dem die Außenhülle (E) Heizeinrichtungen (H) umfasst, um die Plane (1) zu heizen.

## Claims

1. A motor vehicle (V), such as a car, defining a longitudinal direction (L) that extends over the length of the vehicle between a rear bumper (R) and a front bumper (F), the vehicle including an outer body (E) that extends substantially from one bumper to the other starting from a sill (C), the vehicle also being provided with a protective tarpaulin system comprising a flexible tarpaulin (1) for covering the outer body (E) of the vehicle (V) at least in part so as to protect it, the system further comprising a winding drum (2), advantageously installed at the rear bumper (R) of the vehicle, the tarpaulin (1) being windable around the drum (2) between a wound-in storage position and a wound-out position, the tarpaulin (1) including a connection edge (11) that is secured to the drum (3), and an opposite edge (12) that is free;
the motor vehicle being **characterized in that**:
• the free edge (12) of the flexible tarpaulin (1) includes at least one traction element (13) made of ferromagnetic material, and
• the vehicle (V) includes at least one movable magnet (4) that is movable under the outer body (E) along a traction path that extends in the longitudinal direction (L), the movable magnet (4) attracting the traction element (13) of the tarpaulin (1) through the outer body (E) and entraining the traction element (13) of the tarpaulin (1) along the traction path, so as to bring the tarpaulin (1) into the wound-out position of the tarpaulin by sliding over the outer body (E).

2. A vehicle according to claim 1, wherein the traction element (13) is flexible.

3. A vehicle according to claim 1 or claim 2, wherein the movable magnet (4) is connected via a traction cable (41) to a winder (5, 6) that is advantageously arranged at the front bumper (F).

4. A vehicle according to claim 3, wherein the movable magnet (4) remains secured to the traction element (13) while the traction element is being wound onto the drum (2), with the traction cable (41) relaxed or under a small amount of tension.

5. A vehicle according to any preceding claim, including a guide channel (42) in which the movable magnet (4) is moved, the guide channel (42) extending under the outer body (E) of the vehicle, in its direct proximity.

6. A vehicle according to any preceding claim, wherein the outer body (E) is non-ferromagnetic, advantageously being made out of aluminum or out of plastics or composite material.

7. A vehicle according to any preceding claim, wherein the tarpaulin (1) includes a zone (14) that is covered in photovoltaic cells (15).

8. A vehicle according to claim 7, wherein, on either side of the zone (14), the tarpaulin (1) forms flexible side flaps (16) for covering the sides of the vehicle (V).

9. A vehicle according to claim 8, wherein each flexible side flap (16) includes at least one ferromagnetic insert (17), and the vehicle (V) includes stationary magnets (M) in the proximity of the sill (C), so as to hold the side flaps (16) pressed against the outer body (E).

10. A vehicle according to any preceding claim, wherein the outer body (E) includes heater means (H) for heating the tarpaulin (1).
